# EUROPÄISCHE PATENTANMELDUNG

(11) **EP 0 600 373 A1**
(43) Veröffentlichungstag der Anmeldung: **08.06.1994**
(21) Anmeldenummer: 93118994.8
(22) Anmeldetag: 25.11.1993
(51) Int. Cl.: C07F 9/48, C07F 9/46

(54) **Arylphosphonsäurealkyl-arylester, Verfahren zu ihrer Herstellung und ihre Verwendung**

(30) Priorität: 03.12.1992 DE 4240703
(71) Anmelder: HOECHST AKTIENGESELLSCHAFT, D-65929 Frankfurt am Main (DE)
(72) Erfinder: Kleiner, Hans-Jerg, Dr., D-61476 Kronberg/Ts. (DE); Kurth, Inge, D-65193 Wiesbaden (DE)

(57) **Zusammenfassung**

Arylphosphonigsäuremonoalkylmonoarylester der Formel (I) 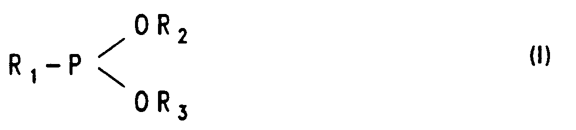
worin bedeuten
- R₁: den Rest 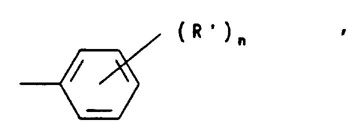 in dem R' gleiche oder verschiedene Bedeutung hat und für (C₁-C₆)Alkyl, (C₁-C₆)Alkoxy, (C₁-C₆)Alkylthio oder Halogen steht, und n eine ganze Zahl von 0 bis 3 bedeutet, oder den Naphthylrest darstellt, der 1 bis 3 Substituierten R' tragen kann,
- R₂: einen (C₁-C₆)Alkylrest und
- R₃: wie R₁, wobei R₁ und R₃ untereinander gleich oder verschieden sein können.

## Beschreibung

Alkylphosphonigsäuremonoalkylmonophenylester sind bereits bekannt. Ihre Herstellung erfolgt durch Umesterung von Alkylphosphonigsäuredialkylestern mit Phenol in Gegenwart katalytischer Mengen Natrium. Ohne Zusatz eines Katalysators tritt dabei keine Umesterung ein. Die Alkylphosphonigsäuredialkylester werden im Überschuß eingesetzt (2 : 1). Trotzdem ist die Bildung von Alkylphosphonigsäurediphenylestern nicht zu unterdrücken. Die Reaktionsprodukte sind infolge Disproportionierungstendenz schwierig zu reinigen und offensichtlich nicht lagerstabil (F. W. Hoffmann et al., Am. Soc. 80, 5937 (1958)).

Erwünscht sind daher Phosphonigsäuremonoalkylmonoarylester, die leicht herzustellen, leicht zu reinigen und lagerstabil sind.
Überraschenderweise wurde gefunden, daß Arylphosphonigsäuremonoalkylmonoarylester der Formel (I) diese Aufgabe erfüllen.

Die Erfindung betrifft daher Arylphosphonigsäuremonoalkylmonoarylester der Formel (I) 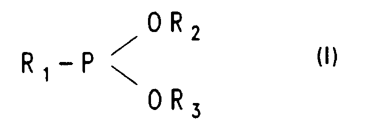
worin bedeuten
- R₁: den Rest,

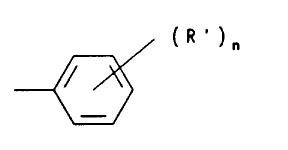

in dem R' gleiche oder verschiedene Bedeutung hat und für (C₁-C₆)Alkyl, vorzugsweise (C₁-C₄)Alkyl, (C₁-C₆)Alkoxy, vorzugsweise (C₁-C₃)Alkoxy, (C₁-C₆)Alkylthio, vorzugsweise (C₁-C₄)-Alkylthio oder Halogen, vorzugsweise Fluor, Chlor oder Brom, steht und n eine ganze Zahl von 0 bis 3, vorzugsweise von 0 bis 1, bedeutet, oder den Naphthylrest darstellt, der gegebenenfalls 1 bis 3, vorzugsweise einen Substituenten R' (R' gleiche Bedeutung wie vorstehend) tragen kann,
- R₂: einen (C₁-C₆)Alkylrest, vorzugsweise (C₁-C₄)Alkylrest, und
- R₃: wie R₁, wobei R₁ und R₃ untereinander gleich oder verschieden sein können.

Außer den in den Beispielen eingesetzten erfindungsgemäßen Verbindungen (I) seien hier beispielsweise genannt:
Phenylphosphonigsäuremonomethylmonophenylester,
Phenylphosphonigsäuremonoethylmono-3-methylphenylester,
Phenylphosphonigsäuremono-n-butylmono-4-methoxyphenylester,
Phenylphosphonigsäuremonoethylmono-4-chlorphenylester,
Phenylphosphonigsäuremonopropylmono-2-tert.-butyl-phenylester,
o-Tolylphosphonigsäuremonoethylmonophenylester,
p-Tolylphosphonigsäuremono-n-propylmonophenylester,
4-Methoxyphenylphosphonigsäuremonoethylmono-2-methylphenylester,
4-Methylthiophenylphosphonigsäuremonoethylmonophenylester,
4-Methylthiophenylphosphonigsäuremonoethylmono-2,4-di-tert.-butylphenylester,
4-Chlorphenylphosphonigsäuremonoethylmonophenylester.

Gegenstand der Erfindung ist weiterhin ein Verfahren zur Herstellung der erfindungsgemäßen Verbindungen der Formel (I) 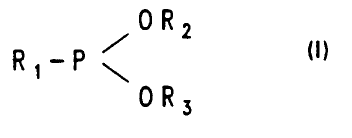
das dadurch gekennzeichnet ist, daß man Arylphosphonigsäuredialkylester der Formel (II) 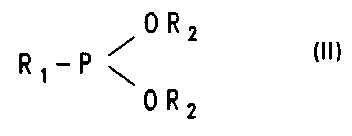
in der die Reste R₁ und R₂ die obige Bedeutung haben, wobei die Reste R₂ innerhalb dieser Bedeutung gleich oder verschieden sein können, mit einem
Phenol der Formel (III)

HOR₃ (III),

in der R₃ die obige Bedeutung hat, unter Abspaltung der Alkohole der Formel (IV)

HOR₂ (IV)

in Abwesenheit von Katalysatoren umestert.

Es ist als überraschend anzusehen, daß der Einsatz von Katalysatoren erfindungsgemäß nicht erforderlich ist. Weiterhin ist es überraschend, daß die Umsetzungen praktisch ohne Bildung von Arylphosphonigsäurediarylestern erfolgen und die erfindungsgemäßen Verbindungen destillativ leicht zu reinigen und lagerstabil sind.
Die Arylphosphonigsäuredialkylester der allgemeinen Formel (II) sind durch einfache Methoden der Herstellung leicht zugänglich (Houben-Weyl, Methoden der organischen Chemie, Band XII/1, Seite 324, 1963).
Die Umsetzung der Arylphosphonigsäuredialkylester mit den Phenolen der allgemeinen Formel (III) erfolgt vorzugsweise im Molverhältnis von 1 : 1. Es sind jedoch Überschüsse sowohl der einen wie der anderen Komponente möglich; beispielsweise können die Phosphonigsäuredialkylester im Molverhältnis von 2 : 1, aber auch von 1 : 2 eingesetzt werden.
Bei der Umsetzung destillieren die Alkohole der allgemeinen Formel (IV) ab, gegebenenfalls unter vermindertem Druck, beispielsweise bei 20 bis 700 mbar, vorzugsweise 100 bis 500 mbar. Die Umsetzung wird dabei vorzugsweise so geführt, daß im Zuge der Reaktion das Vakuum verbessert wird.
Die Umsetzung erfolgt bei Reaktionstemperaturen von im allgemeinen etwa 70 bis 250°C, bevorzugt etwa 100 bis 200°C. Es kann dabei zweckmäßig sein, im Verlaufe der Reaktion die Reaktionstemperatur zu erhöhen.
Die Umesterung verläuft zum Ende der Reaktion nur noch langsam. Hier kann es dann von Vorteil sein, nach etwa 60 bis 80 %igem Umsatz die Reaktion zu beenden und danach destillativ aufzuarbeiten. Dabei werden bei der Destillation die nicht umgesetzten Ausgangsstoffe zuerst wiedergewonnen. Sie stehen dann für eine erneute Reaktion zur Verfügung.

Die erfindungsgemäßen Verbindungen (I) werden in der Regel durch Destillation gewonnen und gereinigt. Sie sind lagerstabil und finden Anwendung als Ausgangsstoffe z. B. für die Herstellung von Photoinitiatoren, Flammschutzmitteln oder Metallextraktionsmitteln.

Gegenstand der Erfindung sind weiterhin Aroyl-aryl-phosphin-säurearylester der Formel (V) 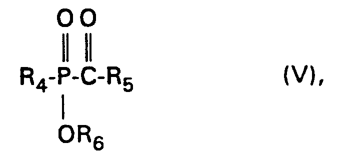
worin, bedeuten
- R₄: gleiche Bedeutung wie R₁, wobei R' hierin vorzugsweise für (C₁-C₄)Alkyl oder (C₁-C₃)Alkoxy steht,
- R₅: den gegebenenfalls mit 1 bis 3, vorzugsweise mit 2 bis 3 (C₁-C₃)Alkyl-oder (C₁-C₃)Alkoxy-Resten substituierten Phenylrest und
- R₆: gleich R₄, wobei R₄ und R₆ untereinander gleich oder verschieden sein können.

Außer den in den Beispielen genannten erfindungsgemäßen Verbindungen (V) seien hier beispielsweise als weitere Vertreter genannt:
Phenyl-2-methyl-benzoyl-phosphinsäure-phenylester,
Phenyl-2,6-dimethyl-benzoyl-phosphinsäure-phenylester,
Phenyl-2,6-dimethoxy-benzoyl-phosphinsäure-2-tert.-butyl-phenylester,
Phenyl-2,6-dimethyl-benzoyl-phosphinsäure-2-tert.-butyl-phenylester,
Phenyl-2,6-dimethyl-benzoyl-phosphinsäure-2,4-di-tert.-butylphenylester,
4-Methoxyphenyl-2,6-dimethyl-benzoyl-phosphinsäure-4-methylphenylester,
4-Methoxyphenyl-2,4,6-trimethyl-benzoyl-phosphinsäure-phenylester,
4-Methoxyphenyl-2,4,6-trimethyl-benzoyl-phosphinsäure-4-methoxyphenylester,
4-Methyl-phenyl-2,4,6-trimethyl-benzoyl-phosphinsäure-phenylester,
4-Methyl-phenyl-2,4,6-trimethyl-benzoyl-phosphinsäure-2-methylphenylester,
4-Methyl-phenyl-2,6-dimethoxy-benzoyl-phosphinsäure-4-methoxy-phenylester.

Die Herstellung dieser Verbindungen (V) gelingt beispielsweise durch Umsetzung von Säurehalogeniden der Formel (VI) 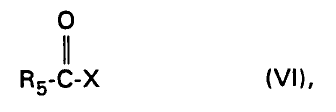
worin R₅ die oben angegebene Bedeutung hat und X = Br, Cl, bevorzugt Cl ist, mit den erfindungsgemäßen Verbindungen der allgemeinen Formel (I) unter Abspaltung von Alkylhalogeniden der Formel R₂ X (VII).

Diese Umsetzung kann ohne oder in einem Lösungsmittel durchgeführt werden. Falls Lösungsmittel bei dem erfindngsgemäßen Verfahren eingesetzt werden, so sind diese aprotisch bzw. unter den Reaktionsbedingungen inert und besitzen vorzugsweise unpolaren Charakter. Beispiele für derartige Lösungsmittel sind: N-Methylpyrrolidon; Dimethylformamid; Ether, wie Diethylether, Tetrahydrofuran, Dioxan, Ethylenglykol-Mono- bzw. Diether, Propylenglykol-Mono- bzw. Diether, Butylenglykol-Mono- bzw. Diether von Monoalkoholen mit einem gegebenenfalls verzweigten Alkylrest von 1 bis 6 Kohlenstoffatomen; Ketone, wie beispielsweise Aceton, Methylethylketon. Methylisopropylketon, Methylisobutylketon, Cyclohexanon and ähnliche; Ester wie Ethylacetat, Butylacetat, Ethylglykolacetat, Methoxypropylacetat; halogenierte Kohlenwasserstoffe. Vorzugsweise handelt es sich hierbei um (cyclo)aliphatische und/oder aromatische Kohlenwasserstoffe, wie Petroläther, Hexan, Heptan, Cyclohexan, Toluol, die verschiedenen Xylole sowie aromatische Lösungsmittel im Siedebereich von ca. 150 bis 180°C (höhersiedende Mineralölfraktionen, wie ®Solvesso). Die Lösungsmittel können dabei einzeln oder im Gemisch eingesetzt werden.

Die Temperaturen für die Durchführung obiger Reaktion liegen im allgemeinen zwischen etwa 70 bis 180°C, bevorzugt zwischen etwa 100 bis 150°C. Die Ausgangsstoffe, nämlich die Säurehalogenide und Arylphophonigsäure-alkyl-arlyester, werden zumeist im Molverhältnis 1 : 1 bis 3 : 1 eingesetzt, bevorzugt im Molverhältnis 2 : 1. Dabei werden beispielsweise die Säurehalogenide vorgelegt und die Arylphosphonigsäure-alkyl-arylester zudosiert. Vorteilhaft ist außerdem der Zusatz tertiärer Amine wie z. B. Trimethylamin, Triethylamin, N,N-Dimethylanilin oder N,N-Diethylanilin in katalytischen Mengen, wie es beispielsweise in der DE-OS 31 39 984 beschrieben ist.

Nach beendeter Abspaltung der Alkylhalogenide werden gegebenenfalls die überschüssigen Mengen der Säurehalogenide abdestilliert. Es verbleiben die erfindungsgemäßen Verbindungen der Formel (V). Zur Reinigung werden sie bevorzugt im Vakuum destilliert. Einer der Vorteile dieser Produkte liegt darin, daß sie häufig ölig und nicht kristallin sind. Derartige Produkte sind in besonders einfacher Weise handhabbar und gut in Lacksystemen einarbeitbar. Aber auch die kristallinen Produkte zeigen eine gute Löslichkeit in Lacksystemen. Ein weiterer Vorteil ist darin zu sehen, daß die gehärteten Lacksysteme nur geringfügig zur Vergilbung neigen.

Die erfindungsgemäßen Aroyl-aryl-phosphinsäurearylester (V) lassen sich beispielsweise als Photoinitiatoren in photopolymerisierbaren Massen, insbesondere Überzugsmitteln, Lacken und Druckfarben, verwenden.

### Beispiel 1

### Herstellung von Phenylphosphonigsäuremonoethyl-monophenylester bei Normaldruck

81 g (0,409 Mol) Phenylphosphonigsäurediethylester und 38,5 g (0,409 Mol) Phenol wurden vermischt und unter Rühren erhitzt. Bei 145°C destillierte über eine kleine Kolonne Ethanol ab. Die Temperatur wurde allmählich bis auf 195°C erhöht. Insgesamt destillierten 11 g (0,239 Mol) Ethanol ab. Anschließend wurde das Reaktionsgemisch destilliert. Nach einem Vorlauf von 50 g, der aus den nicht umgesetzten Ausgangskomponenten bestand, erhielt man 54 g mit einem Siedepunkt von 105 bis 120°C bei 0,1 mbar. Bei einem ca. 60 %igem Umsatz betrug die Ausbeute 92 % der Therorie.

| C₁₄H₁₅O₂P (246) | | | |
|---|---|---|---|
| ber.: | 68,29 % C | 6,10 % H | 12,60 % P |
| gef.: | 68,3 % C | 6,05 % H | 12,4 % P |

### Beispiel 2

### Herstellung von Phenylphosphonigsäuremonoethyl-monophenylester unter vermindertem Druck

118,8 g (0,6 Mol) Phenylphosphonigsäurediethylester und 56,4 g (0,6 Mol) Phenol wurden vermischt und unter Rühren bei 300 bis 500 mbar erhitzt. Bei 148°C destillierte über eine kleine Kolonne Ethanol ab. Schrittweise wurde nun die Innentemperatur bis 180°C erhöht. Insgesamt destillierten 20 g (0,436 Mol) Ethanol ab. Anschließend wurde das Reaktionsgemisch destilliert. Nach einer ersten Fraktion von 53 g, die im wesentlichen die nicht umgesetzten Ausgangsstoffe enthielt, erhielt man 90 g mit einem Siedepunkt von 104 bis 113°C bei 0,1 mbar. Bei einem 73 %igem Umsatz betrug die Ausbeute 84 % der Theorie.

Nach einer Lagerzeit von 10 Monaten wurde erneut destilliert. Man erhielt mit 95 %iger Ausbeute ein unverändertes Produkt.

### Beispiel 3

### Herstellung von Phenylphosphonigsäuremonoethyl-mono-4-methylphenylester

118,8 g (0,6 Mol) Phenylphosphonigsäurediethylester und 64,9 g (0,6 Mol) p-Kresol wurden vermischt und bei 300 bis 500 mbar auf 130°C erwärmt. Über eine kleine Kolonne destillierte Ethanol ab. Schrittweise wurde die Temperatur bis 165°C erhöht, gleichzeitig wurde das Vakuum bis 100 mbar verbessert. Insgesamt destillierten 21 g (0,458 Mol) Ethanol ab. Anschließend wurde das Reaktionsgemisch destilliert. Nach einer ersten Fraktion, die die nicht umgesetzten Ausgangsstoffe enthielt, erhielt man 107 g mit einem Siedepunkt von 118 bis 120°C bei 0,1 mbar. Bei einem 76 %igem Umsatz betrug die Ausbeute ca. 90 % der Theorie.

| C₁₅H₁₇O₂P(260) | | | |
|---|---|---|---|
| ber.: | 69,23 % C | 6,54 % H | 11,92 % P |
| gef.: | 69,1 % C | 6,50 % H | 11,5 % P |

### Beispiel 4

### Herstellung von Phenylphosphonigsäuremonoethyl-mono-2,4-dimethylphenylester

81 g (0,409 Mol) Phenylphosphonigsäurediethylester und 50 g (0,409 Mol) 2,4-Dimethylphenol wurden vermischt und bei ca. 400 mbar auf 135°C erwärmt. Über eine kleine Kolonne destillierte Ethanol ab. Die Temperatur wurde schrittweise auf 180°C erhöht, dann wurde das Vakuum bis 100 mbar verbessert. Insgesamt destillierten 16 g (0,349 Mol) Ethanol ab. Anschließend erhielt man bei einer Destillation eine Hauptfraktion von 79 g mit einem Siedepunkt von 108 bis 116°C bei 0,1 mbar. Bei einem 85 %igen Umsatz betrug die Ausbeute ca. 83 % der Theorie.

| C₁₆H₁₉O₂P (274) | | | |
|---|---|---|---|
| ber.: | 70,07 % C | 6,93 % H | 11,31 % P |
| gef.: | 69,7 % C | 6,99 % H | 11,3 % P |

### Beispiel 5

### Herstellung von Phenylphosphonigsäuremonoethyl-mono-2,6-dimethyl-phenylester

64,8 g (0,327 Mol) Phenylphosphonigsäurediethylester und 40 g (0,327 Mol) 2,6-Dimethylphenol wurden unter Vakuum bei 350 mbar auf 165°C erhitzt. Bei dieser Temperatur destillierte langsam Ethanol ab. Im Verlaufe von 8 Stunden wurde die Temperatur langsam auf 185°C erhöht und das Vakuum auf 100 mbar verbessert. Insgesamt spalteten sich 12 g (0,26 Mol) Ethanol ab. Anschließend wurde das Reaktionsgemisch destilliert. Nach einer ersten Fraktion, die die Ausgangskomponenten enthielt, erhielt man 63 g mit einem Siedepunkt von 116°C bei 0,2 mbar. Bei einem Umsatz von 80% betrug die Ausbeute 88 % der Theorie.

| C₁₆H₁₉O₂P (274) | | | |
|---|---|---|---|
| ber.: | 70,07 % C | 6,93 % H | 11,31 % P |
| gef.: | 69,5 % C | 6,88 % H | 11,1 % P |

### Beispiel 6

### Herstellung von Phenylphosphonigsäuremonethyl-mono-2,5-dimethylphenylester

81 g (0,409 Mol) Phenylphosphonigsäurediethylester und 50 g (0,409) Mol) 2,5-Dimethylphenol wurden unter Rühren im Vakuum bei 400 mbar auf 145°C erhitzt. Dabei destillierte über eine kleine Kolonne Ethanol ab. Schrittweise wurde nun die Temperatur bis 180°C erhöht und das Vakuum bis auf 100 mbar verbessert. Insgesamt destillierten 15,4 g (0,355 Mol) Ethanol ab. Anschließend wurde das Reaktionsgemisch destilliert. Man erhielt nach einem Vorlauf, der Ausgangsstoffe enthielt, 76 g mit einem Siedepunkt von 114°C bei 0,1 mbar. Bei einem 82 %igem Umsatz betrug die Ausbeute 83 % der Theorie.

| C₁₆H₁₉O₂P (274) | | | |
|---|---|---|---|
| ber.: | 70,07 % C | 6,93 % H | 11,31 % P |
| gef.: | 70,1 % C | 6,85 % H | 11,4 % P |

### Beispiel 7

### Herstellung von Phenylphosphonigsäuremonoethyl-mono-2,4,6-trimethylphenylester

61,3 g (0,31 Mol) Phenylphosphonigsäurediethylester und 50,0 g (0,367 Mol) 2,4,6-Trimethylphenol wurden unter Rühren bei 200 mbar auf 180 bis 200°C erhitzt; über eine Vigreux-Kolonne destillierten 10,5 g (0,228 Mol) Ethanol ab. Nach beendeter Umsetzung wurde das Reaktionsgemisch destilliert. Man erhielt 55 g mit einem Siedepunkt von 135°C bei 0,2 mbar. Das entspricht einer Ausbeute von 85 % der Theorie, bezogen auf die abgespaltene Menge Ethanol.

| C₁₇H₂₁O₂P (288) | | | |
|---|---|---|---|
| ber.: | 70,83 % C | 7,29 % H | 10,76 % P |
| gef.: | 70,5 % C | 7,3 % H | 10,8 % P |

### Beispiel 8

### Herstellung von Phenyl-2,4,6-trimethyl-benzoyl-phosphinsäure-phenylester

96,4 g (0,528 Mol) 2,4,6-Trimethylbenzoylchlorid und 1,2 g Triethylamin wurden auf 115°C erhitzt und 65 g (0,264 Mol) Phenylphosphonigsäure-monoethylester-monophenylester in 75 Minuten unter Stickstoffatmosphäre und bei lebhaften Rühren eingetropft. Ethylchlorid gaste ab und wurde in einer nachgeschalteten Kühlfalle kondensiert. 2 Stunden wurde dann bei 115° C nachgerührt und gleichzeitig ein stärkerer Stickstoffstrom durch die Apparatur geleitet. Insgesamt befanden sich am Ende der Reaktion 16 g (94 % der Theorie) Ethylchlorid in der Kühlfalle. Dann wurde das überschüssige 2,4,6-Trimethylbenzoylchlorid bei 1 mbar abdestilliert und der Rückstand mit Hilfe eines Dünnschichtverdampfers (Badtemperatur: 230°C; 0,3 mbar) destilliert. Man erhielt 78 g. Die Ausbeute betrug 81 % der Theorie.

| C₂₂H₂₁O₃P (364) | | | |
|---|---|---|---|
| ber.: | 72,53 % C | 5,77 % H | 8,52 % P |
| gef.: | 72,3 % C | 5,81 % H | 8,5 % P |

### Beispiel 9

### Herstellung von Phenyl-2,4-6-trimethyl-benzoyl-phosphinsäure-4-methylphenylester

65,3 g (0,358 Mol) 2,4,6-Trimethylbenzoylchlorid und 0,6 g Triethylamin wurden auf 115°C erhitzt und 46,5 g (0,179 Mol) Phenylphosphonigsäure-monoethyl-mono-4-methylphenylester in einer Stunde unter Stickstoffatmosphäre und bei lebhaften Rühren eingetropft. Ethylchlorid gaste ab und wurde in einer nachgeschalteten Kühlfalle kondensiert. 2 Stunden wurde dann bei 115°C nachgerührt unter verstärktem Stickstoffstrom. Insgesamt erhielt man 10,5 g Ethylchlorid (91 % der Theorie). Dann wurde das überschüssige 2,4,6-Trimethylbenzoylchlorid abdestilliert, und anschließend der Rückstand mit Hilfe eines Dünnschichtverdampfers (Badtemperatur: 230°C; 0,2 mbar) destilliert. Man erhielt 57 g. Die Ausbeute betrug 84 % der Theorie. Das so gewonnene Produkt konnte nun in einer normalen Destillationsapparatur bei 0,3 mbar/217 bis 219°C destilliert werden, wobei es in der Vorlage kristallisierte. Umkristallisation aus Cyclohexan; Schmp.: 114 bis 116°C.

| C₂₃H₂₃O₃P (378) | | | |
|---|---|---|---|
| ber.: | 73,02 % C | 6,09 % H | 8,20 % P |
| gef.: | 72,9 % C | 6,00 % H | 8,1 % P |

### Beispiel 10

### Herstellung von Phenyl-2,4,6-trimethyl-benzoyl-phosphinsäure-2,4-dimethylphenylester

79,9 g (0,438 Mol) 2,4,6-Trimethylbenzoylchlorid und 1 g Triethylamin wurden unter Stickstoffatmosphäre auf 115°C erhitzt und 60 g (0,219 Mol) Phenylphosphonigsäuremonoethyl-mono-2,4-dimethylphenylester in einer Stunde bei lebhaftem Rühren zugetropft. Ethylchlorid gaste ab und kondensierte in einer nachgeschalteten Kühlfalle. 2 Stunden wurde dann bei 115°C unter verstärktem Stickstoffstrom nachgerührt. Insgesamt erhielt man 14 g Ethylchlorid (99 % der Theorie). Dann wurde das überschüssige Säurechlorid abdestilliert und der verbleibende Rückstand mit Hilfe eines Dünnschichtverdampfers (Badtemperatur: 240°C; 0,2 mbar) destilliert. Man erhielt 63 g. Die Ausbeute betrug 74 % der Theorie. Das Produkt kristallisierte und wurde aus Isopropanol umkristallisiert. Schmp.: 78 bis 80°C.

| C₂₄H₂₅O₃P (392) | | | |
|---|---|---|---|
| ber.: | 73,47 % C | 6,38 % H | 7,91 % P |
| gef.: | 73,2 % C | 6,28 % H | 7,5 % P |

### Beispiel 11

### Herstellung von Phenyl-2,4,6-trimethyl-benzoylphosphinsäure-2,6-dimethylphenylester

Das Produkt wurde analog Beispiel 10 hergestellt. Destillation mit Hilfe eines Dünnschichtverdampfers (Badtemperatur: 235°C; 0,3 mbar). Die Ausbeute betrug 61 % der Theorie.

| C₂₄H₂₅O₃P (392) | | | |
|---|---|---|---|
| ber.: | 73,47 % C | 6,38 % H | 7,91 % P |
| gef.: | 73,4 % C | 6,21 % H | 7,9 % P |

### Beispiel 12

### Herstellung von Phenyl-2,4,6-trimethyl-benzoyl-phosphinsäure-2,5-dimethylphenylester

Das Produkt wurde analog Beispiel 10 hergestellt. Destillation mit Hilfe eines Dünnschichtverdampfers (Badtemperatur: 230°C; 0,1 mbar). Die Ausbeute betrug 73 % der Theorie.

| C₂₄H₂₅O₃P (392) | | | |
|---|---|---|---|
| ber.: | 73,47 % C | 6,38 % H | 7,91 % P |
| gef.: | 73,4 % C | 6,30 % H | 7,4 % P |

### Beispiel 13

### Herstellung von Phenyl-2,4,6-trimethyl-benzoyl-phosphinsäure-2,4,6-trimethylphenylester

44,4 g (0,243 Mol) 2,4,6-Trimethylbenzoylchlorid und 0,5 g Triethylamin wurden unter Stickstoffatmosphäre auf 115°C erhitzt und 35 g (0,1215 Mol) Phenylphosphonigsäuremonoethyl-mono-2,4,6-trimethylphenylester in einer Stunde bei lebhaftem Rühren zugetropft. Ethylchlorid gaste ab und kondensierte sich in einer nachgeschalteten Kühlfalle. 2 Stunden wurde bei 115 bis 120°C unter verstärktem Stickstoffstrom nachgerührt. Insgesamt kondensierten sich 7,5 g Ethylchlorid (95 % der Theorie). Anschließend wurde das überschüssige Säurechlorid abdestilliert und der verbleibende Rückstand mit Hilfe eines Dünnschichtverdampfers destilliert (Badtemperatur: 230°C; 0,2 mbar). Man erhielt 37 g. Das ist eine Ausbeute von 75 % der Theorie. Das Produkt kristallisierte. Umkristallisation aus Isopropanol: Schmp.: 94 bis 96°C.

| C₂₅H₂₇O₃P (406) | | | |
|---|---|---|---|
| ber.: | 73,89 % C | 6,65 % H | 7,64 % P |
| gef.: | 73,8 % C | 6,55 % H | 7,7 % P |

### Beispiel 14

### Herstellung von Phenylphosphonigsäuremonoethyl-mono-4-methoxy-phenylester

99 g(0,5 Mol) Phenylphosphonigsäurediethylester und 62 g (0,5 Mol) 4-Methoxyphenol wurden vermischt und unter Rühren bei 415 mbar erhitzt. Bei 115°C destillierte über eine kleine Kolonne Ethanol ab. Schrittweise wurde nun die Temperatur bis 160°C erhöht, gleichzeitig wurde das Vakuum bis 70 mbar verbessert. Insgesamt destillierten 21,5 g (0,467 Mol) Ethanol ab. Anschließend wurde der Ansatz gekühlt und destilliert. Nach einer ersten Fraktion von 29 g, die im wesentlichen die nicht umgesetzten Ausgangsstoffe enthielt, erhielt man 103 g mit einem Siedepunkt von 135 bis 138°C bei 0,1 bis 0,2 mbar. Die Ausbeute betrug damit 75 % der Theorie.

| C₁₅H₁₇O₃P (276) | | | |
|---|---|---|---|
| ber.: | 65,22 % C | 6,16 % H | 11,23 % P |
| gef.: | 65,1 % C | 6,2 % H | 10,9 % P |

### Beispiel 15

### Herstellung von Phenyl-2,4,6-trimethyl-benzoyl-phosphinsäure-4-methoxy-phenylester

59,5 g (0,326 Mol) 2,4,6-Trimethylbenzoylchlorid und 0,75 g Triethylamin wurden auf 115°C erhitzt und 45 g (0,163 Mol) Phenylphosphonigsäure-monoethyl-mono-4-methoxyphenylester in einer Stunde unter Stickstoffatomosphäre und bei lebhaftem Rühren eingetropft. Ethylchlorid gaste ab und wurde in einer nachgeschalteten Kühlfalle kondensiert. Anschließend wurde dann bei 110 bis 115°C 90 Minuten nachgerührt. Insgesamt befanden sich am Ende der Reaktion 9 g (86 % der Theorie) Ethylchlorid in der Kühlfalle.

Dann wurde das überschüssige 2,4,6-Trimethylbenzoylchlorid bei 1mbar abdestilliert und der Rückstand mit Hilfe eines Dünnschichtverdampfers (Badtemperatur: 260°C; 0,4 mbar) destilliert. Man erhielt 40 g. Die Ausbeute betrug 65 % der Theorie.

| C₂₃H₃₃O₃P (378) | | | |
|---|---|---|---|
| ber.: | 65,40 % C | 8,73 % H | 8,20 % P |
| gef.: | 65,5 % C | 8,8 % H | 8,1 % P |

### Beispiel 16

### Herstellung von Phenylphosphonigsäuremonoethyl-mono-2-tert.-butylphenylester

99 g (0,5 Mol) Phenylphosphonigsäurediethylester und 75 g (0,5 Mol) 2-tert.-Butylphenol wurden vermischt und unter Rühren bei 530 mbar auf 170 °C erhitzt . Dabei destillierte über eine kleine Kolonne Ethanol ab. Schrittweise wurde nun die Temperatur auf 180 °C erhöht, gleichzeitig wurde das Vakuum bis 100 mbar verbessert. Nach 16 Stunden destillierten ingesamt 18 g Ethanol ab. Anschließend wurde der Ansatz gekühlt und destilliert. Nach einer ersten Fraktion, die die nicht umgesetzten Ausgangsstoffe enthielt, erhielt man 116 g mit einem Siedepunkt von 139 °C bei 0,1 mbar. Die Ausbeute betrug damit bei einem 78 %igen Umsatz fast 100 % der Theorie.

| C₁₈H₂₃O₂P (302) | | | |
|---|---|---|---|
| ber.: | 71,52 % C | 7,62 % H | 10,27 % P |
| gef.: | 71,5 % C | 7,5 % H | 9,9 % P |

### Beispiel 17

### Herstellung von Phenyl-2,4,6-trimethyl-benzoyl-phosphinsäure-2-tert.-butyl-phenylester

69,7 g (0,382 Mol) 2,4,6-Trimethylbenzoylchlorid und 0,9 g Triethylamin wurden unter Stickstoffatmosphäre auf 115 °C erhitzt und 57,8 g (0,191 Mol) Phenylphosphonigsäuremonoethyl-mono-2-tert.-butylphenylester in einer Stunde unter Rühren eingetropft. Ethylchlorid gaste ab und wurde in einer nachgeschalteten Kühlfalle kondensiert. Anschließend wurde 2 Stunden nachgerührt. Insgesamt kondensierten 11,7 g Ethylchlorid (95 % der Theorie). Nach Abdestillieren des überschüssigen Säurechlorids wurde der Rückstand mit Hilfe eines Dünnschichtverdampfers (Badtemperatur: 270 °C; 0,4 mbar) destilliert. Man erhielt 70 g. Das Produkt wurde aus konzentrierter Acetonlösung zur Kristallisation gebracht, Schmelzpunkt: 76-79 °C. Die Ausbeute betrug 87 % der Theorie.

| C₂₆H₂₉O₃P (420) | | | |
|---|---|---|---|
| ber.: | 74,29 % C | 6,91 % H | 7,38 % P |
| gef.: | 74,1 % C | 6,9 % H | 7,4 % P |

### Beispiel 18

### Herstellung von Phenylphosphonigsäuremonoethyl-mono-2,4-di-tert.-butylphenylester

79,2 g (0,4 Mol) Phenylphosphonigsäurediethylester und 82,5 g (0,4 Mol) 2,4-Di-tert.-butylphenol wurden auf 160 °C erhitzt bei 400 mbar. Dabei begann Ethanol über eine kleine Kolonne abzudestillieren. Schrittweise wurde nun die Temperatur auf 180-190 °C erhöht bei 150-200 mbar. Nach 20 Stunden destillierten insgesamt 14 g Ethanol ab. Nach dem Abkühlen wurde destilliert.

Nach einer ersten Fraktion, die die nicht umgesetzten Ausgangsstoffe enthielt, erhielt man 70 g mit einem Siedepunkt von 149 °C bei 0,1 mbar. Die Ausbeute betrug damit bei einem 76 %igem Umsatz 64 % der Theorie.

| C₂₂H₃₁O₂P (358) | | | |
|---|---|---|---|
| ber.: | 73,74 % C | 8,66 % H | 8,66 % P |
| gef.: | 73,5 % C | 8,7 % H | 8,5 % P |

### Beispiel 19

### Herstellung von Phenyl-2,4,6-trimethyl-benzoyl-phosphinsäure-2,4-di-tert.-butylphenylester

50,4 g (0,276 Mol) 2,4,6-Trimethylbenzoylchlorid und 0,6 g Triethylamin wurden unter Stickstoffatmosphäre auf 115 °C erwärmt und 49,4 g (0,138 Mol) Phenylphosphonigsäuremonoethyl-mono-2,4-di-tert.-butylphenylester in einer Stunde unter Rühren eingetropft. Ethylchlorid gaste ab und wurde in einer nachgeschalteten Kühlfalle kondensiert. Anschließend wurde 2 Stunden nachgerührt. Insgesamt kondensierten 8,5 g Ethylchlorid (96 % der Theorie). Nach Abdestillation überschüssigen Säurechlorids wurde der Rückstand nach dem Abkühlen mit wenig Aceton versetzt. Man erhielt nach Kristallisation 42 g mit einem Schmelzpunkt von 107-110 °C. Die Ausbeute betrug damit 64 % der Theorie.

| C₃₀H₃₇O₃P (476) | | | |
|---|---|---|---|
| ber.: | 75,63 % C | 7,77 % H | 6,51 % P |
| gef.: | 75,6 % | 7,5 % H | 6,3 % P |

### Beispiel 20

### Herstellung von 4-Methoxyphenyl-phosphonigsäure-monoethyl-monophenylester

113 g (0,496 Mol) 4-Methoxyphenylphosphonigsäurediethylester und 46,6 g (0,496 Mol) Phenol wurden vermischt und unter Rühren auf 110 °C bei 350-400 mbar erhitzt. Dabei destillierte über eine kleine Kolonne Ethanol ab. Schrittweise wurde nun die Temperatur auf 150 °C erhöht, gleichzeitig wurde das Vakuum bis 100 mbar verbessert. Nach beendeter Reaktion wurde der Ansatz gekühlt und destilliert. Man erhielt 105 g mit einem Siedepunkt von 159 °C bei 0,4 mbar. Die Ausbeute betrug damit 77 % der Theorie.

| C₁₅H₁₇O₃P (276) | | | |
|---|---|---|---|
| ber.: | 65,22 % C | 6,16 % H | 11,23 % P |
| gef.: | 65,2 % C | 6,1 % H | 11,0 % P |

### Beispiel 21

### Herstellung von 4-Methoxyphenyl-2,4-6-trimethyl-benzoyl-phosphinsäurephenylester

46,3 g (0,2538 Mol) 2,4,6-Trimethylbenzoylchlorid und 0,6 g Triethylamin wurden unter Stickstoffatomsphäre auf 115 °C erhitzt und 35 g (0,127 Mol) 4-Methoxyphenylphosphonigsäure-monoethyl-monophenylester in 40 Minuten unter Rühren eingetropft. Dabei gaste Ethylchlorid ab. Nach 2 Stunden Nachrühren wurde nach Abdestillation des überschüssigen Säurechlorids der Rückstand mit Hilfe eines Dünnschichtverdampfers (Badtemperatur: 255 °C; 0,2 mbar) destilliert. Man erhielt 42 g eines geblichen Öls. Die Ausbeute betrug 84 % der Theorie.

| C₂₃H₂₃O₄P (394) | | | |
|---|---|---|---|
| ber.: | 70,05 % C | 5,84 % H | 7,87 % P |
| gef.: | 70,1 % C | 5,75 % H | 7,8 % P |

## Patentansprüche

1. Arylphosphonigsäuremonoalkylmonoarylester der Formel (I) 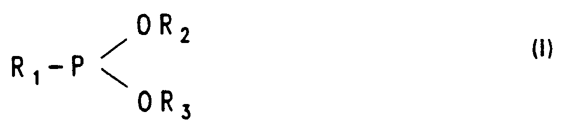 worin bedeuten
R₁ den Rest 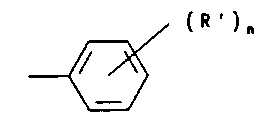
in dem R' gleiche oder verschiedene Bedeutung hat und für (C₁-C₆)Alkyl, (C₁-C₆)Alkoxy, (C₁-C₆)Alkylthio oder Halogen steht, und n eine ganze Zahl von 0 bis 3 bedeutet, oder den Naphthylrest darstellt, der gegebenenfalls 1 bis 3 Substituenten R' tragen kann,
R₂ einen (C₁-C₆)Alkylrest und
R₃ wie R₁, wobei R₁ und R₃ untereinander gleich oder verschieden sein können.

2. Arylphosphonigsäuremonoalkylmonoarylester nach Anspruch 1, dadurch gekennzeichnet, daß n für 0, 1 oder 2 steht.

3. Arylphosphonigsäuremonoalkylmonoarylester nach Anspruch 1, dadurch gekennzeichnet, daß R' für (C₁-C₄)Alkyl, (C₁-C₃)Alkoxy oder Chlor steht.

4. Arylphosphonigsäuremonoalkylmonoarylester nach mindestens einem der Ansprüche 1 bis 3, dadurch gekennzeichnet, daß R₂ einen (C₁-C₄)Alkylrest bedeutet.

5. Arylphosphonigsäuremonoalkylmonoarylester nach mindestens einem der Ansprüche 1 bis 4 aus der Gruppe
Phenylphosphonigsäuremonomethylmonophenylester,
Phenylphosphonigsäuremonoethylmonophenylester,
Phenylphosphonigsäuremonoethylmono-3-methylphenylester,
Phenylphosphonigsäuremonoethyl-mono-4-methylphenylester,
Phenylphosphonigsäuremonoethyl-mono-2,4-dimethylphenylester,
Phenylphosphonigsäuremonoethylmono-2,5-dimethylphenylester,
Phenylphosphonigsäuremonoethyl-mono-2,6-dimethylphenylester,
Phenylphosphonigsäuremono-n-butylmono-4-methoxyphenylester,
Phenylphosphonigsäuremonoethylmono-4-chlorphenylester,
o-Tolylphosphonigsäuremonoethylmonophenylester,
p-Tolylphosphonigsäuremono-n-propylmonophenylester,
4-Methoxyphenylphosphonigsäuremonoethylmono-2-methylphenylester,
4-Methylthiophenylphosphonigsäuremonoethylmonophenylester,
4-Chlorphenylphosphonigsäuremonoethylmonophenylester.

6. Verfahren zur Herstellung der Arylphosphonigsäuremonoalkylmonoarylester nach mindestens einem der Ansprüche 1 bis 5, dadurch gekennzeichnet, daß man Arylphosphonigsäuredialkylester der Formel (II) 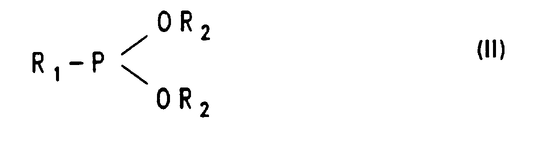 in der die Reste R₁ und R₂ die obige Bedeutung haben, wobei die Reste R₂ innerhalb dieser Bedeutung gleich oder verschieden sein können, mit einem Phenol der Formel (III)
HOR₃ (III),
in der R₃ die obige Bedeutung hat, unter Abspaltung der Alkohole der Formel (IV)
HOR₂ (IV)
in Abwesenheit von Katalysatoren umestert.

7. Verfahren nach Anspruch 6, dadurch gekennzeichnet, daß die Umesterung bei einem Molverhältnis der Verbindungen (II) und (III) von 2:1 bis 1:2 erfolgt.

8. Verfahren nach Anspruch 7, dadurch gekennzeichnet, daß das Molverhältnis von (II) zu (III) 1:1 ist.

9. Verfahren nach mindestens einem der Ansprüche 6 bis 8, dadurch gekennzeichnet, daß die Umesterung bei Temperaturen von 70 bis 250°C durchgeführt wird.

10. Verwendung der Arylphosphonigsäuremonoalkylmonoarylester (I) nach mindestens einem der Ansprüche 1 bis 5 zur Herstellung von Photoinitiatoren, Flammschutzmitteln oder Metallextraktionsmitteln.

11. Aroyl-aryl-phosphin-säurearylester der Formel (V) 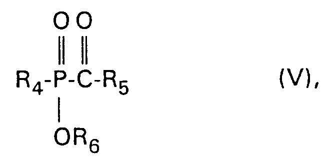 worin bedeuten
R₄ gleiche Bedeutung wie R₁, in dem R' vorzugsweise für (C₁-C₄)Alkyl oder (C₁-C₃)Alkoxy steht,
R₅ den Phenylrest, der gegebenenfalls mit 1 bis 3 (C₁-C₃)Alkyl- oder (C₁-C₃)Alkoxy-Resten substituiert sein kann, und
R₆ gleich R₄, wobei R₄ und R₆ untereinander gleich oder verschieden sein können.

12. Aroyl-aryl-phosphinsäurearylester nach Anspruch 11, dadurch gekennzeichnet, daß R' für Methyl und/oder Methoxy steht.

13. Aroyl-aryl-phosphinsäurearylester nach Anspruch 11, dadurch gekennzeichnet, daß bei R₄ n für 0 steht.

14. Aroyl-arylphosphinsäurearylester nach mindestens einem der Ansprüche 11 bis 13, dadurch gekennzeichnet, daß der Phenylrest bei R₅ 1 bis 3 (C₁-C₃)Alkylgruppen, vorzugsweise Methylgruppen, trägt.

15. Aroyl-arylphosphinsäurearylester nach mindestens einem der Ansprüche 11 bis 14 aus der Gruppe Phenyl-2-methyl-benzoyl-phosphinsäure-phenylester, Phenyl-2,6-dimethyl-benzoyl-phosphinsäure-phenylester, Phenyl-2,4,6-trimethyl-benzoyl-phosphinsäure-phenylester, Phenyl-2,4,6-trimethyl-benzoyl-phosphinsäure-4-methylphenylester, Phenyl-2,4,6-trimethyl-benzoylphosphinsäure-2,4-dimethylphenylester, Phenyl-2,4,6-trimethyl-benzoylphosphinsäure-2,5-dimethylphenylester, Phenyl-2,4,6-trimethylbenzoylphosphinsäure-2,6-dimethylphenylester, Phenyl-2,4,6-trimethyl-benzoyl-phosphinsäure-2,4,6-trimethylphenylester, 4-Methoxyphenyl-2,6-dimethyl-benzoyl-phosphinsäure-4-methylphenylester, 4-Methoxyphenyl-2,4,6-trimethyl-benzoyl-phosphinsäure-phenylester, 4-Methoxyphenyl-2,4,6-trimethyl-benzoyl-phosphinsäure-4-methoxyphenylester, 4-Methyl-phenyl-2,4,6-trimethyl-benzoylphosphinsäure-2-tert.-butyl-phenylester, 4-Methyl-phenyl-2,4,6-trimethyl-benzoyl-phosphinsäure-2-methylphenylester, 4-Methyl-phenyl-2,6-dimethoxy-benzoyl-phosphinsäure-4-methoxy-phenylester.

16. Verfahren zur Herstellung der Aroyl-aryl-phosphin-säurearylester der Formel (V) nach mindestens einem der Ansprüche 11 bis 15, dadurch gekennzeichnet, daß man Arylphosphonigsäuremonoalkylmonoarylester der Formel (I) 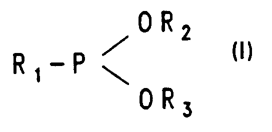 in der R₁ bis R₃ die obige Bedeutung haben, mit Säurehalogeniden der Formel (VI) 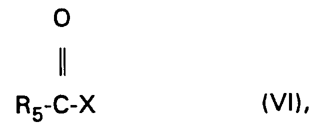 worin R₅ die oben angegebene Bedeutung hat und X = Br, Cl, bevorzugt Cl ist, unter Abspaltung von Alkylhalogeniden der Formel
R₂ X (VII)
umgesetzt, wobei das Molverhältnis von (VI) zu (I) 1:1 bis 3:1, vorzugsweise 2 : 1 beträgt.
